## Europäisches Patentamt
## European Patent Office
## Office européen des brevets

(19)

(11) Numéro de publication: **0 074 869**
**B1**

(12)

# FASCICULE DE BREVET EUROPEEN

(45) Date de publication du fascicule du brevet:
17.04.85

(51) Int. Cl.⁴: **G 02 F 1/13**, G 09 G 3/36

(21) Numéro de dépôt: **82401542.4**

(22) Date de dépôt: **17.08.82**

(54) **Dispositif de visualisation à effet thermo-électrique.**

(30) Priorité **25.08.81 FR 8116218**

(43) Date de publication de la demande:
**23.03.83 Bulletin 83/12**

(45) Mention de la délivrance du brevet:
**17.04.85 Bulletin 85/16**

(84) Etats contractants désignés:
**DE GB IT NL**

(56) Documents cités:
**EP - A - 0 023 447**
**GB - A - 1 302 482**

**IBM TECHNICAL DISCLOSURE BULLETIN, vol. 15, no. 6, novembre 1972, page 1811, New York (USA); J.V. POWERS: "Thermally activated liquid crystal display"**

(73) Titulaire: **THOMSON-CSF, 173, Boulevard Haussmann, F-75379 Paris Cedex 08 (FR)**

(72) Inventeur: **Hareng, Michel, THOMSON-SCF**
**SCPI 173, bld. Haussmann, F-75379 Paris Cedex 08 (FR)**
Inventeur: **Hehlen, Robert, THOMSON-SCF**
**SCPI 173, bld. Haussmann, F-75379 Paris Cedex 08 (FR)**
Inventeur: **Le Berre, Serge, THOMSON-SCF**
**SCPI 173, bld. Haussmann, F-75379 Paris Cedex 08 (FR)**
Inventeur: **Leclerc, Pierre, THOMSON-SCF**
**SCPI 173, bld. Haussmann, F-75379 Paris Cedex 08 (FR)**
Inventeur: **Marcenac, Philippe, THOMSON-SCF**
**SCPI 173, bld. Haussmann, F-75379 Paris Cedex 08 (FR)**
Inventeur: **Perbet, Jean-Noel, THOMSON-SCF**
**SCPI 173, bld. Haussmann, F-75379 Paris Cedex 08 (FR)**

(74) Mandataire: **Lepercque, Jean et al, THOMSON-CSF**
**SCPI 173, Bld Haussmann, F-75379 Paris Cedex 08 (FR)**

EP 0 074 869 B1

BUNDESDRUCKEREI BERLIN

## Description

La présente invention concerne les dispositifs de visualisation de caractères en ligne affichés à partir d'un signal électrique de commande et plus particulièrement les dispositifs de visualisation dans lesquels le matériau inscriptible réagit optiquement à un champ électrique au cours d'un cycle thermique comportant une phase d'échauffement et une phase de refroidissement sous champ.

L'invention s'applique en particulier aux dispositifs de visualisation à agencement matriciel comportant une couche de cristal liquide en phase smectique.

Un dispositif de ce genre a été décrit dans EP-A-23 447 et dans FR-A-2 496 309 intitulé »Dispositif de commande d'un écran de visualisation et écran de visualisation commandé par ce dispositif«. Le dispositif proposé permet tout en conservant une haute définition pour l'écran de visualisation d'abaisser considérablement le nombre de dispositifs électroniques de commande externe par multiplexage des voies de commande.

Dans ces demandes de brevet on a décrit un dispositif de visualisation à commande matricielle comprenant une couche de matériau inscriptible par un effet mixte thermique et électrique. Suivant ces demandes, deux réseaux croisés de conducteurs définissent un agencement matriciel de points d'affichage. L'un des réseaux se compose d'éléments chauffants destinés à élever transistoirement la température de la couche de matériau inscriptible. L'autre réseau coopère avec le premier pour soumettre localement la couche à des champs électriques de commande. Suivant le document français les dispositifs électroniques de commande d'un réseau à N bandes conductrices sont répartis en deux groupes de $\sqrt{N}$ éléments. Une telle disposition conduit à un nombre de systèmes électroniques de chauffage minimum, mais du point de vue des interconnexions à prévoir, le choix implique la réalisation de croisements isolés en nombre relativement important. De plus, la longueur des bandes chauffantes peut engendrer des chutes de tension importantes et mal adaptées à une commande par composants électroniques à basse tension.

Afin de pallier à ces inconvénients, la présente invention propose un mode d'adressage particulier permettant de visualiser une ligne d'écriture en limitant les tensions de commande à appliquer de l'extérieur à l'écran du dispositif de visualisation.

A première vie, il semblerait que ce soit un inconvénient de choisir de chauffer les éléments les plus nombreux du réseau de conducteur croisés. Mais il peut être avantageux de substituer une électronique de commande composée d'un petit nombre de circuits comprenant des transistors fonctionnant sous des tensions élevées, par un électronique de commande composés d'un nombre plus élevé de circuits mais dont les transistors fontionnent en basse tension. Un autre inconvénient est que le temps d'accès de l'information est plus long, mais pour des écrans où il n'est pas nécessaire de rafraîchir l'information, cet inconvénient n'est pas très important.

L'invention a pour objet un dispositif de visualisation destiné à l'affichage d'au moins une ligne d'écriture composée de caractères en réponse à un signal électrique incident, comprenant une couche d'un matériau inscriptible par transformation de phase thermo-électrique, deux réseaux croisés d'électrodes encadrant ladite couche et des moyens de commande électrique réagissant au contenu dudit électrique incident de manière à chauffer successivement les électrodes de l'un desdits réseaux et à appliquer aux bandes de ladite couche en phase de refroidissement un champ électrique destiné à contrecarrer l'effet de diffusion induit, lesdits moyens de commande étant multiplexés de façon à commuter les courants de chauffage avec un nombre restreint d'éléments de commutation grâce à des éléments à conduction unidirectionelle placés en série avec chaque électrode du réseau de chauffage, dans lequel les électrodes parcourues par les courants de chauffage sont plus courtes et plus nombreuses que les électrodes situées sur la face opposée de ladite couche.

L'invention sera mieux comprise au moyen de la description qui va suivre, complétée par les figures annexées qui représentent:
— figure 1: la disposition générale du dispositif de visualisation selon l'invention;
— figures 2, 3 et 5: des diagrammes explicatifs de l'adressage thermique multiplexé;
— figure 4: le schéma électrique d'un dispositif de visualisation selon l'invention.

Dans tout ce qui suit, on devra se garder de confondre les deux niveaux de multiplexage adoptés pour la visualisation. Un premier niveau de multiplexage concerne l'agencement matriciel de deux réseaux délectrodes qui s'étendent de part et d'autre de la couche de cristal liquide. L'un de ces réseaux sert au chauffage bande par bande de la couche de cristal liquide tandis que l'autre sert à appliquer à la bande qui se refroidit un ensemble de tensions électriques destinées à réaliser l'inscription de points diffusants. La commande de chauffage représente un second niveau de multiplexage basé sur la subdivision en deux groupes des moyen de commutation reliés aux deux extrémités de chaque électrode chauffante.

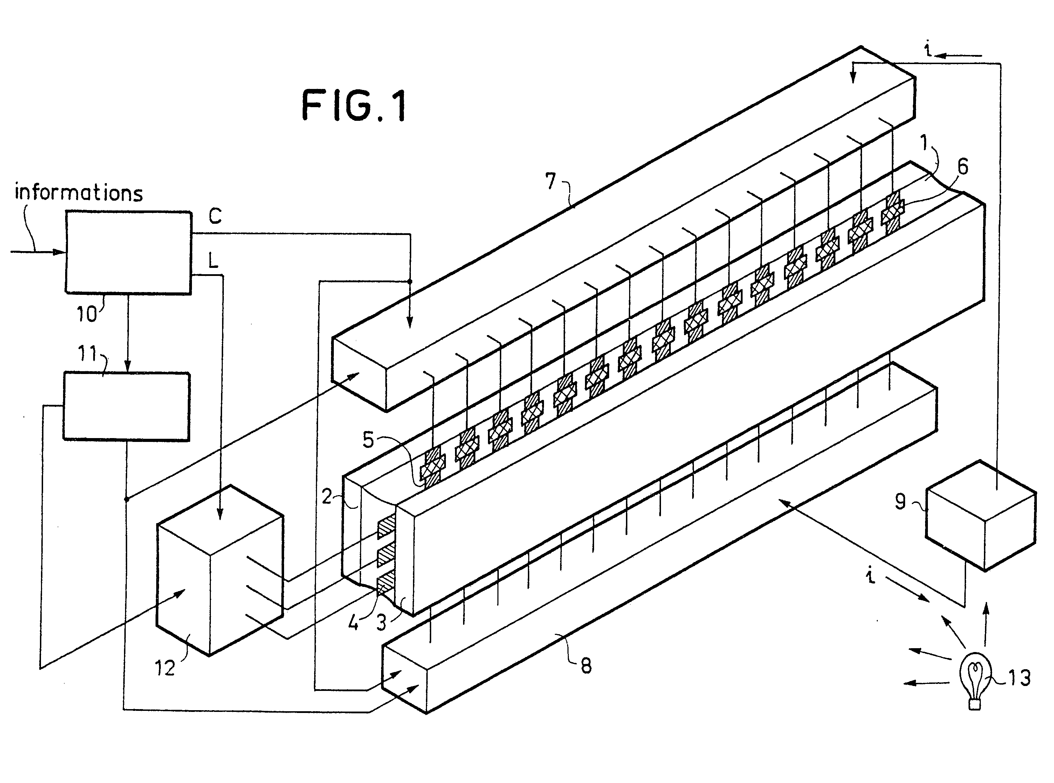

A titre d'exemple non limitatif, on peut voir sur la figure 1 un dispositif de visualisation selon l'invention dont l'écran comprend un nombre de cellules d'affichage élémentaires volontairement limité pour une meilleure compréhension du fonctionnement de ce dispositif. Cet écran est composé de cellules d'affichage élémentaires définies par deux réseaux de conducteurs croisés: un premier réseau formé de 3 connexions de lignes et un deuxième réseau formé de 15 connexions de colonnes. Les connexion de colonnes, qui sont les éléments les plus nombreux et les plus courts, ont été choisies pour jouer le rôle de bandes chauffantes et sont soumises à des tensions de chauffage délivrées par le second niveau de multiplexage.

La figure 1 montre donc un écran de visualisation dont la couche de matériaux inscriptible 1 est formée par un cristal liquide smectique inséré entre 2 lames parallèles 2 et 3 en verre par exemple et dont l'écartement d'une dizaine de microns est défini par des cales d'épaisseur non représentées. Sur les faces intérieures de ces lames on a déposé des réseaux d'électrodes qui se croisent orthogonalement. Dans le cas d'un écran fontionnant en réflexion on peut envisager la solution consistant à choisir les connexions de lignes 4 transparentes et les connexions de colonnes 5 réfléchissantes. Les électrodes 4 peuvent être réalisée en oxyde d'étain ou d'indium ou par un mélange de ces deux oxydes. Les électrodes 5 peuvent être réalisées en aluminium. L'intervalle entre chaque électrode 5 est suffisamment petit par rapport à leur lageur afin que l'image réfléchie par l'écran ne soit pas tramée.

Avec chaque bande chauffante ou connexion de colonne 5 a été mise en série une diode 6 de façon à rendre ces conducteurs unidirectionnels. La réalisation de ces diodes, ou d'une façon plus générale d'éléments nonlinéaires en $\frac{I}{V}$, dépend essentiellement des substrats utilisés pour l'écran de visualisation. Avec les substrats de type silicium monocristallin, utilisés dans les écrans comportant des points élémentaires de petites dimensions, c'est-à-dire de 20 à 100 microns, les diodes peuvent être intégrées directement dans le ubstrat swemi-conducteur ou rapportées selon une technologie de circuit hybride. Avec des substrats tels que le verre utilisé dans les écrans à visions directe, de plus grandes dimensions et comportant deux à dix points par millimètre, les diodes sont rapportées comme précédemment ou réalisées au moyen de silicium amorphe.

Le dispositif de visualisation fonctionne de la façon suivante. Le signal électrique incident représentatif des caractères à afficher est d'abord reçu par un circuit 10 qui sépare les signaux affectés aux lignes de ceux affectés aux colonnes. Les signaux de lignes sont envoyés dans un circuit 12 de commande de ligne et possédant une mémoire tampon. Les signaux de colonnes sont répartis entre deux blocs, de commande 7 et 8 qui permettent par l'affectation de tensions de commande appropriées le passage d'un courant de chauffage i issu d'un générator de chauffage 9. Une horloge 11 permet la coordination des signaux électriques de commande par son action sur les circuits 7, 8 et 12 en fonction des opérations effectuées par le circuit séparateur 10. Une source 13 fournit à l'écran la lumière incidente que celui-ci modulera en fonction des signaux de commande qui lui sont appliqués.

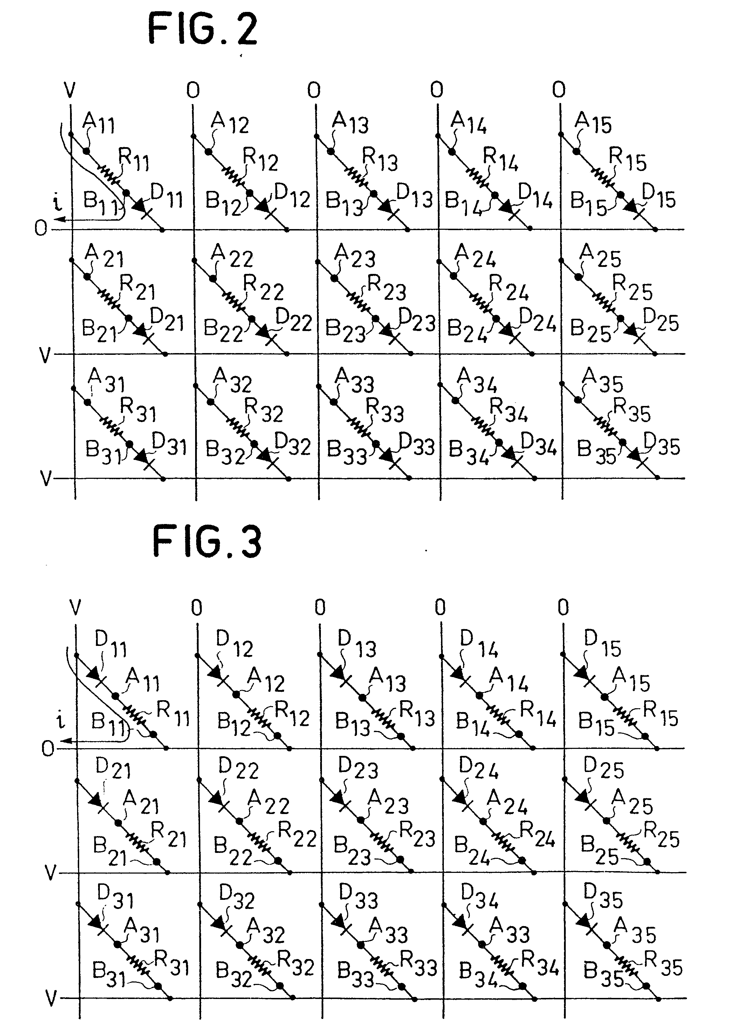

Les figures 2 et 3 sont des schémas explicatifs de l'adressage thermique multiplexé. Comme il a été dit plus haut les bandes chauffantes sont parcourues par des courants de chauffage délivrés par P bornes d'alimentation d'un premier bloc commutateur 7 et par Q bornes d'alimentation d'un second bloc commutateur 8. On peut donc illustrer la double commande de chauffage par un agencement matriciel à P lignes et Q colonnes permettant d'adresser $N = P \cdot Q$ bandes chauffantes.

Sur les figures 2 et 3, les 15 bandes chauffantes de l'écran décrit par la figure 1 ont été désignée par des termes tels que Rij allant de $R_{11}$ à $R_{35}$. Les figures 2 et 3 ne se distinguent que par l'emplacement des diodes situées soit en aval soit en amont des résistances chauffantes. Les références telles que Aij et Bij désignent les extrémités de chaque bande. Chaque bande chauffante Rij est mise en série avec un élément non-linéaire en $\frac{I}{V}$, par exemple une diode Dij et l'ensemble est soumis au potentiel Vij qui est la différence de potentiel entre la colonne Qi et la ligne Pj. Avec un tel nombre de bandes chauffantes on peut agencer le multiplexage relatif au chauffage de ces bandes de deux façons: soit 3 lignes et 5 colonnes pour les matrices représentées dans les figures 2 et 3, soit 5 lignes et 3 colonnes. Chaque diode Dij est montée identiquement à la suite de chaque résistance chauffante Rij. Le rôle, de cette diode est d'empêcher le passage du courant de chauffage dant toute autre bande chauffante que la bande Rij considérée. La matrice de chauffage (P, Q) est soumise à deux tensions possibles: 0 ou +V (V étant une tension positive).

Dans chacune des figures 2 et 3, un exemple de fontionnement est donné par l'indication de tensions affectées aux différentes lignes et colonnes de la matrice de chauffage ainsi que par la présence du courant de chauffage i traversant la bande chauffante $R_{11}$. On voit qu'avec une telle distribution des potentiels Qi et Pj et à cause de la présence des diodes Dij, il n'y a que la bande $R_{11}$ qui est traversée par le courant de chauffage. Par un procédé connu de multiplexage défini par les circuits 7 et 8, les bandes chauffantes sont à tour de rôle traversées par le courant de chauffage i.

L'emplacement des diodes joue un rôle non négligeable. En effet il faut autant que possible éviter de laisser inutilement des potentiels présents sur les bandes chauffantes, ces potentiels étant néfastes à la durée de vie des cirstaux liquides.

La figure 2 présente un premier mode de montage des diodes. En choisissant les potentiels Qi et Pj comme indiqués sur la figure 2, on constante que $R_{11}$ est traversée par le courant de chauffage i. Avec ce système de multiplexage une seule des colonnes, la première est au potentiel V tandis wue toutes les autres sont au potentiel 0. Inversement la première ligne est au potentiel 0 et la diode $D_{11}$ qui est polarisée correctement permet le passage du courant i dans $R_{11}$, tandis que toutes les autres lignes sont au potentiel V. Toutes les diodes autres que $D_{11}$ sont bloquées: la différence de potentiel à leurs bornes est soit 0 soit — V. On constate également que $R_{21}$ et $R_{31}$ reliées à la première colonne sont au potentiel V mais ne sont traversées par aucun courant.

La figure 3 présente un deuxième mode de montage des diodes. Les potentiels Qi et Pj sont les mêmes que pour la figure 2. Dans ce cas il n'y a toujours que $R_{11}$ qui est traversée par le courant i mais le potentiel V est maintenant présent sur les bandes chauffantes reliées aux ligne 2 et 3, soit dans le cas présent sur 10 bandes chauffantes. Les considérations précédentes sont bien sûr valables pour le chauffage de toutes les bandes de récran de visualisation. La solution à retenir est celle qui en relation avec la commande par champ électrique assure en moyenne la moindre différence de potentiel entre les faces de la couche de cristal liquide.

Il est à remarquer qu'avec ce système à bandes de chauffage multiplexé le nombre de dispositifs électroniques permettant de délivrer les tensions de chauffage est: P+Q pour P · Q bandes. Il est bien sûr avantageux de réduire le plus possible le nombre de ces dispositifs. Ceci est réalisé lorsque P=Q. Cette solution exige que le nombre de bandes chaffantes soit le carré d'un nombre entier ce qui n'est pas toujours conciliable avec l'écran demandé.

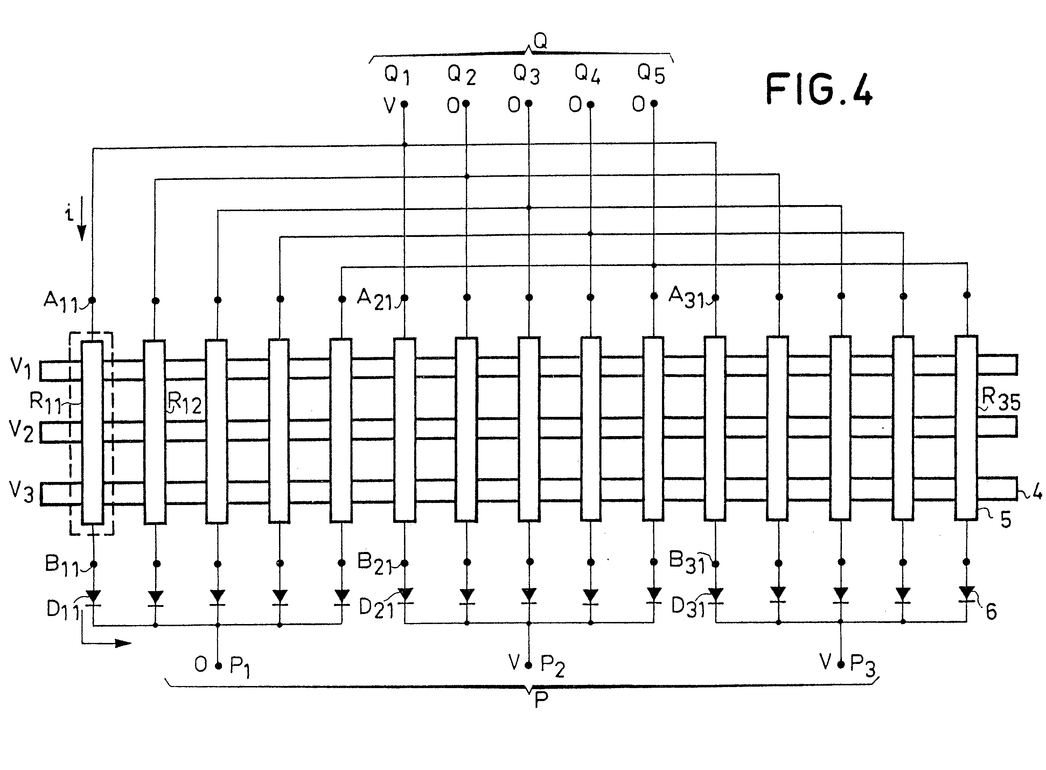

La figure 4 est un schéma électrique d'un dispositif de visualisation selon l'invention. Il est composé, comme il a été dit plus haut, de 3 lignes 4 et de 15 colonnes 5. Les bandes chauffantes sont caractérisées par leur résistance Rij et leurs extrémités Aij et Bij. La distribution des tensions de multiplexage des bandes chauffantes, issues des bloc de commande 7 et 8 se fait par l'intermédiaire des diodes 6 qui sont individualisées par les termes Dij. Un exemple de fonctionnement de l'écran est donné par l'application des tensions indiquées sur la figure 4. Pour exciter les cellules de l'écran correspondant à la première colonne, l'ordre des opérations sera le suivant. En choisissant les mêmes tensions que précédemment pour le chauffage des bandes chauffantes, la première colonne de résistance $R_{11}$ est traversée par le courant de chauffage i et provoque l'échauffement du cristal liquide avoisinant qui passe de la phase smectique à la phase isotrope. Après redistribution des potentiels de multiplexage relatifs au chauffage le courant i ne traverse plus la bande $R_{11}$ mais la bande $R_{12}$, le cristal liquide avoisinant la première colonne commence à se refroidir et les potentiels de ligne $V_1$, $V_2$ et $V_3$ sont appliqués respectivement entre les lignes et la colonne $R_{11}$ afin d'exciter cette partie de l'écran.

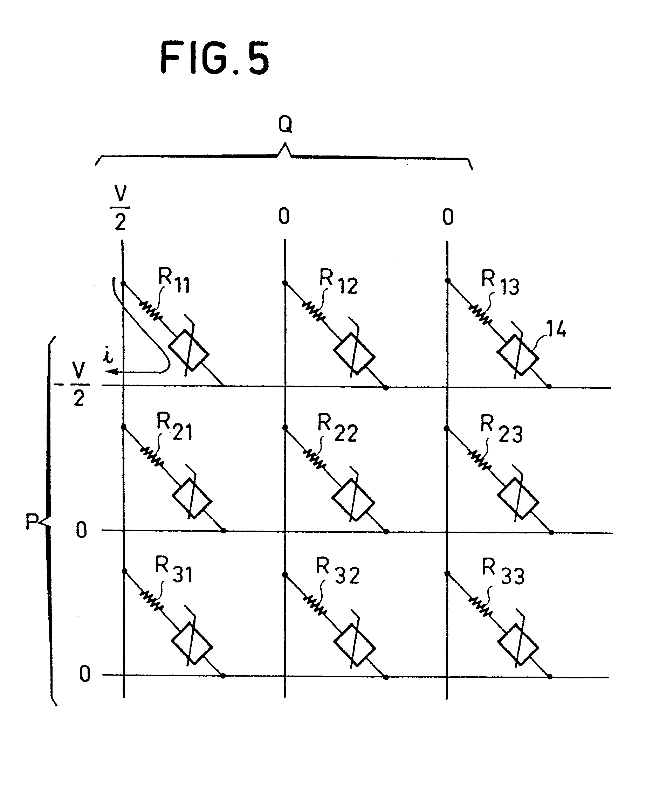

Il entre également dans le cadre de l'invention de remplacer les diodes Dij par des varistances et de modifier les tensions de multiplexage délivrées par les circuits 7 et 8 en conséquence. Un exemple de distribution de ces tensions est donné par la figure 5 qui est un diagramme explicatif de l'adressage thermique multiplexé. Sur ce schéma on n'a représenté que 3 lignes et 3 colonnes de multiplexage ce qui est amplement suffisant pour en comprendre le fonctionnement. Les bandes chauffantes sont appelées Rij comme précédemment et les varistances sont représentées par les éléments 14. Les varistances sont caractérisées par une tension de seuil Vs audelà de laquelle elles sont conductrices. Comme ce sont des éléments bidirectionnels il est nécessaire de modifier les tensions de multiplexage. Pour provoquer le passage d'un courant de chauffage dans $R_{11}$, la première colonne est au potentiel $+\dfrac{V}{2}$ et la première ligne au potentiel $-\dfrac{V}{2}$ ce qui soumet l'ensemble formé par la bande chauffante $R_{11}$ et la varistance correspondante au potentiel V choisi de telle façon qu'il permet le passage du courant de chauffage i capable d'élever suffisamment la température de la bande $R_{11}$. Il faut également que $\dfrac{V}{2}$ soit inférieur à la tension de seuil des varistances pour éviter d'adresser d'autres bandes chauffantes. Les autres lignes et colonnes représentées sur la figure 5 étant au potentiel 0, aucune autre bande que $R_{11}$ n'est traversée par un courant de chauffage.

Il entre également dans le cadre de l'invention de réaliser les éléments chauffants en un matériau transparent, afin d'utiliser l'écran en transmission. Dans ce cas la faible longueur des bandes chauffantes est d'autant plus appréciable que le matériau les constituant est plus résistif que l'aluminium généralement utilisé dans les dispositifs de visualisation fonctionnant en réflexion.

Le dispositif décrit plus haut impose un grand nombre de croisements aux connexions aboutissant aux bandes chauffantes. Selon une technique connue, des couches d'isolant déposées par exemple par sérigraphie doivent être prévus aux endroits de ces croisements pour éviter les court-circuits possibles.

Le système décrit dans cette demande de brevet est particuliérement avantageux lorsque la matrice de visualisation présente une de ses composantes disproportionnées par rapport à l'autre. L'invention est particulièrement bien adaptée aux écrans rectangulaires comportant un grand nombre de colonnes et un faible nombre de lignes, par exemple dans l'affichage de caractères alphanumériques sur une ou plusieurs lignes. Dans ce genre d'écran la longueur des colonnes qui sont les éléments chauffants, est faible: de l'ordre de 10 mm.

L'invention permet donc un emploi beaucoup plus souple que précédemment de la technique de multiplexage des bandes chauffantes dans un dispositif de visualisation. Elle est particulièrement intéressante pour les écrans rectangulaires à faible nombre de lignes et grand nombre de colonnes.

## Revendications

1. Dispositif de visualisation destiné à l'affichage d'au moins une ligne d'écriture composée de caractères en réponse à un signal électrique incident, comprenant une couche d'un matériau inscriptible (1) par transformation de phase thermo-électrique, deux réseaux croisés d'électrodes (4 et 5) encadrant ladite couche et des moyens de commande électrique réagissant au contenu dudit signal électrique incident de manière à chauffer successivement les électrodes (5) de l'un desdits réseaux et à appliquer aux bandes de ladite couche en phase de refroidissement un champ électrique destiné à contrecarrer l'effet de diffusion induit, lesdits moyens de commande étant multiplexés de façon à commuter les courants de chauffage avec un nombre restreint d'éléments de commutation grâce à des éléments non-linéaires (6) placés en série avec chaque électrode du réseau de chauffage, dans lequel les électrodes parcourues par les courants de chauffage sont plus courtes et plus nombreuses que les électrodes situées sur la face opposée de ladite couche.

2. Dispositif de visualisation selon la revendication 1, dans lequel lesdits éléments non-linéaires (6) sont des éléments à conduction unidirectionnelle.

3. Dispositif de visualisation selon la revendication 2, dans lequel lesdits éléments à conduction unidirectionelle sont situés de façon à assurer en moyenne la moindre différence de potentiel entre les faces de ladite couche de matériau inscriptible (1).

4. Dispositif de visualisation selon la revendication 2 dans lequel lesdits éléments à conduction unidirectionnelle sont des diodes.

5. Dispositif de visualisation selon la revendication 1 dans lequel ledit matériau inscriptible (1) est du type cristaux liquides à phase smectique.

## Patentansprüche

1. Anzeigevorrichtung, die dazu bestimmt ist, mindestens eine aus Schriftzeichen bestehende Schriftzeile gemäß einem eintreffenden Signal anzuzeigen, mit einer Schicht (1) eines durch thermoelektrische Phasentransformation beschreibbaren Materials, wobei zwei überkreuzte Elektrodennetze (4 und 5) die Schicht umrahmen und elektrische Steuermittel auf den Inhalt des eintreffenden elektrischen Signals derart reagieren, daß die Elektroden (5) eines der Netze nacheinander erhitzt werden und daß an die Bänder dieser Schicht in der Abkühlungsphase ein elektrisches Feld angelegt wird, das dem induzierten Diffusionseffekt entgegenwirken soll, wobei die Steuermittel so multiplexiert sind, daß die Heizströme mit einer beschränkten Anzahl von Schaltelementen umgeschaltet werden, aufgrund von nicht-linearen Elementen (6), die in Serie mit jeder Elektrode des Heiznetzes angeordnet sind, in dem die von den Heizströmen durchflossenen Elektroden kürzer und in größerer Anzahl vorhanden sind als die Elektroden, die sich auf der entgegengesetzten Seite der Schicht befinden.

2. Anzeigevorrichtung nach Anspruch 1, in der die nicht-linearen Elemente (6) in nur einer Richtung leitende Elemente sind.

3. Anzeigevorrichtung nach Anspruch 2, in der die in nur einer Richtung leitenden Elemente so angeordnet sind, daß sie im Mittel die geringste Potentialdifferenz zwischen den Seiten der Schicht (1) aus beschreibbarem Material bewirken.

4. Anzeigevorrichtung nach Anspruch 2, in der die in nur einer Richtung leitenden Elemente Dioden sind.

5. Anzeigevorrichtung nach Anspruch 1, in der das beschreibbare Material (1) vom Flüssigkristalltyp mit Smetik-Phase ist.

## Claims

1. A display device for displaying at least one writing line consisting of characters in response to an incident electric signal, comprising a layer of material (1) which can be inscribed by thermoelectric phase transformation, two crossed systems of electrodes (4 and 5) surrounding said layer, and electric control means reacting to the content of the incident electric signal, so as to successively heat the electrodes (5) of one of the said systems and to apply to the strips of said layer in the cooling phase an electric field for counteracting the induced diffusion effect, said control means being multiplexed in such a way as to switch over the heating currents with a small number of switching elements, as a result of non-linear elements (6) placed in series with each electrode of the heating system, wherein the electrode of the heating system, wherein the electrodes traversed by the heating currents are shorter and more numerous than the electrodes on the opposite face of said layer.

2. A display device according to claim 1, wherein the non-linear elements (6) are unidirectional conduction elements.

3. A display device according to claim 2, wherein the unidirectional conduction elements are located so as to ensure on average the minimum potential difference between the faces of the inscribable material layer (1).

4. A display device according to claim 2, wherein the unidirectional conductional conduction elements are diodes.

5. A display device according to claim 1, wherein the inscribable material (1) is of the smectic phase liquid crystal type.

# FIG.1

0 074 869

# FIG.2

# FIG.3

9

FIG.4

# FIG.5